(19) Europäisches Patentamt / European Patent Office / Office européen des brevets

(11) **EP 2 828 643 B1**

(12) **FASCICULE DE BREVET EUROPEEN**

(45) Date de publication et mention
de la délivrance du brevet:
**07.06.2023   Bulletin 2023/23**

(21) Numéro de dépôt: **13720083.8**

(22) Date de dépôt: **20.03.2013**

(51) Classification Internationale des Brevets (IPC):
**G01N 21/47** *(2006.01)*        **G01N 21/64** *(2006.01)*

(52) Classification Coopérative des Brevets (CPC):
**G01N 21/47; G01N 21/645;** G01N 2021/1734;
G01N 2021/6419; G01N 2021/6421;
G01N 2021/6493; G01N 2201/1293

(86) Numéro de dépôt international:
**PCT/IB2013/052207**

(87) Numéro de publication internationale:
**WO 2013/140350 (26.09.2013 Gazette 2013/39)**

(54) **PROCEDE ET APPAREIL DE CARACTERISATION D'ECHANTILLONS PAR MESURE DE LA DIFFUSION LUMINEUSE ET DE LA FLUORESCENCE.**

VERFAHREN UND VORRICHTUNG ZUR PROBENCHARAKTERISIERUNG DURCH STREULICHT-UND FLUORESZENZMESSUNG

METHOD AND APPARATUS FOR CHARACTERISING SAMPLES BY MEASURING LIGHT SCATTERING AND FLUORESCENCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **22.03.2012   FR 1252569**

(43) Date de publication de la demande:
**28.01.2015   Bulletin 2015/05**

(73) Titulaire: **Spectralys Innovation
92600 Asnières-sur-Seine (FR)**

(72) Inventeurs:
• **ACHARID, Abdelhaq
95400 Arnouville (FR)**
• **BIRLOUEZ-ARAGON, Inès
95120 Ermont (FR)**

(74) Mandataire: **Gevers & Orès
Immeuble le Palatin 2
3 Cours du Triangle
CS 80165
92939 Paris La Défense Cedex (FR)**

(56) Documents cités:
**WO-A1-2011/158192     WO-A2-2008/027323**

• **YONG-LE PAN ET AL:
"Dual-excitation-wavelength fluorescence spectra and elastic scattering for differentiation of single airborne pollen and fungal particles", ATMOSPHERIC ENVIRONMENT, PERGAMON, GB, vol. 45, no. 8, 17 décembre 2010 (2010-12-17), pages 1555-1563, XP028364834, ISSN: 1352-2310, DOI: 10.1016/J.ATMOSENV.2010.12.042 [extrait le 2011-01-08]**
• **RINNAN A ET AL: "First order Rayleigh scatter as a separate component in the decomposition of fluorescence landscapes", ANALYTICA CHIMICA ACTA, ELSEVIER, AMSTERDAM, NL, vol. 537, no. 1-2, 29 avril 2005 (2005-04-29), pages 349-358, XP027730647, ISSN: 0003-2670 [extrait le 2005-04-29]**

EP 2 828 643 B1

**Description**

L'invention porte sur un procédé et un appareil de caractérisation d'échantillons, et notamment d'aliments, de médicaments, de milieux biologiques ou environnementaux exploitant des mesures de diffusion lumineuse et de fluorescence et un traitement statistique desdites mesures.

L'invention peut être appliquée en particulier, mais pas uniquement, à l'industrie agroalimentaire ou pharmaceutique. Par exemple, elle permet l'étude de l'évolution des propriétés nutritionnelles et/ou toxicologiques d'un aliment au cours de sa préparation ou conservation, ainsi que le contrôle des traitements auxquels un aliment est soumis (cuisson, torréfaction...).

L'invention peut également être appliquée à l'industrie environnementale, par exemple au traitement des eaux usées, des boues industrielles, des milieux en fermentation, etc.

Plus généralement, l'invention peut être appliquée à la détermination de tout indicateur de qualité d'un échantillon, et/ou de tout paramètre caractérisant un procédé auquel ledit échantillon a été soumis.

Le procédé se base sur des méthodes chimiométriques, et en particulier, dans des modes de réalisation avantageux de l'invention, sur l'analyse statistique multivariée ou - de préférence - multivoies de données spectroscopiques. L'analyse multivoies est l'extension naturelle de l'analyse multivariée lorsque les données sont arrangées dans des tableaux à trois voies ou plus. Elle se base sur l'utilisation de modèles statistiques tels que « PARAFAC » (« Parallel Factor», c'est à dire modèle à facteurs parallèles) et NPLS (« N-ways Partial Least Squares régression », c'est à dire régression par moindres carrés partiels à n-voies). On pourra se rapporter à ce propos à l'ouvrage de référence de R. Bro, « Multi-way Analysis in the Food Industry Models, Algorithms, and Applications », PhD thesis, Universiteit van Amsterdam, 1998.

Le document WO 2011/080408 décrit un procédé et un appareil d'analyse spectroscopique d'échantillons, en particulier alimentaires, mettant en oeuvre un traitement multvoies de données spectroscopiques. Le procédé comprend l'éclairage de chaque échantillon à analyser par une pluralité de rayonnements lumineux d'excitation à des longueurs d'onde respectives ; l'acquisition d'une pluralité de spectres de fluorescence frontale de chaque échantillon, correspondant chacun à un rayonnement lumineux d'excitation respectif ; un prétraitement de ces spectres de fluorescence, destiné en particulier à leur soustraire une contribution due à la diffusion Rayleigh ; l'application aux spectres prétraités d'un modèle statistique multivoies et la détermination - par exemple par régression multilinéaire - d'un indicateur de qualité de chaque échantillon et/ou d'un paramètre caractérisant un procédé auquel chaque échantillon a été soumis.

Le document WO 2011/158192 décrit un procédé de caractérisation d'un ou plusieurs échantillons d'un produit agroalimentaire qui utilise également l'acquisition d'une pluralité de spectres de fluorescence frontale de chaque échantillon et leur traitement au moyen d'un procédé d'analyse multivoies des données. Ce procédé aboutit à la représentation de chaque échantillon par un point dans un espace multidimensionnel, ce qui permet le calcul d'une distance par rapport à un ou plusieurs échantillons de référence. Cette distance permet, par exemple, de quantifier la naturalité et/ou la fraîcheur de l'échantillon.

Les articles:

- « Analysis of visible réflectance spectra of stored, cooked and diseased chicken meats », Y. Lio et Y.-R. Chen, Meat Science 58 (2001), pages 395 - 401; et
- « The Use of Visible and Near-Infrared Reflectance Measurements to assess Sensory Changes in Carrot Texture and Sweetness during Heat Treatment », N. De Belie et al., Biosystems Engineering (2003) 85(2) pages 213 - 225

décrivent des procédés de caractérisation d'échantillons alimentaires, permettant en particulier d'étudier leur cuisson, basés sur l'application de procédés d'analyse multivoies à des spectres de réflectance.

La mise en oeuvre de ces procédés est relativement complexe, et donc coûteuse, car elle nécessite l'acquisition et le traitement d'une pluralité de spectres, et donc d'un volume important de données.

Le document WO 2008/027323 A2 divulgue une méthode de détection des caries à un stade précoce chez un patient. La méthode permet de construire une image améliorée de la dent à partir de mesures de la lumière rétrodiffusée et de la fluorescence émise par la dent.

L'invention vise à surmonter ces inconvénients de l'art antérieur.

Un objet de l'invention permettant d'atteindre ce but est un procédé de caractérisation d'au moins un échantillon, comportant :

a) l'éclairage dudit ou de chaque échantillon à analyser par N≥1 rayonnements lumineux à des longueurs d'onde d'éclairage respectives ;
b) l'acquisition, pour chaque dit rayonnement lumineux, d'au moins une intensité lumineuse de fluorescence et d'au moins une intensité lumineuse de diffusion élastique émises par ledit ou par chaque échantillon ;
c) pour ledit ou chaque échantillon, la détermination d'un indicateur vectoriel à partir desdites intensités lumineuses de fluorescence et de diffusion élastique ;
d) la détermination d'au moins un paramètre scalaire caractérisant chaque échantillon, ou un procédé auquel ledit échantillon a été soumis, à partir de l'indicateur vectoriel correspondant,
le procédé étant caractérisé en ce que ladite étape b) comporte, pour ledit ou chaque échantillon, l'acquisition d'au moins un spectre de fluorescence et en ce que ladite étape c) comporte, également pour ledit ou chaque échantillon :

- le calcul d'un vecteur de *scores* par application d'un modèle statistique multivarié ou multivoies au dit ou à chaque spectre de fluorescence, ledit modèle statistique étant défini par un vecteur de loadings d'éclairage et par un vecteur de loadings de fluorescence ; et
- la concaténation dudit vecteur de *scores* avec au moins une valeur d'intensité de diffusion élastique ou un paramètre caractéristique d'au moins un spectre de diffusion élastique, de sorte à obtenir ledit indicateur vectoriel.

Par rapport aux procédés précités connus de l'art antérieur, et plus particulièrement des documents WO 2011/080408 et WO 2011/158192, un procédé selon l'invention se caractérise par l'utilisation conjointe de données de fluorescence et de diffusion qui permet d'améliorer la caractérisation de l'échantillon et/ou de réduire le nombre de sources d'éclairage utilisées, et donc de simplifier l'instrumentation de mise en oeuvre. Il convient de souligner que dans les documents WO 2011/080408 et WO 2011/158192 précités, l'intensité de la lumière diffusée est vue uniquement comme une nuisance perturbant l'acquisition des spectres de fluorescence, considérés les seuls porteurs d'information exploitable.
Selon différents modes de réalisation particuliers du procédé de l'invention :

- Lesdites intensités lumineuses de fluorescence et de diffusion élastique peuvent être acquises en mode frontal.
- Ladite étape a) peut comporter l'éclairage dudit ou de chaque échantillon à analyser par un nombre compris entre 1 et 6 de rayonnements lumineux sensiblement monochromatiques.
- Ledit modèle statistique mis en oeuvre à l'étape c) peut être choisi parmi un modèle PARAFAC et un modèle NPLS.
- Ladite étape b) peut comporter, pour ledit ou chaque échantillon, l'acquisition d'au moins un spectre comprenant des contributions dues à la fluorescence et à la diffusion élastique, la soustraction desdites contributions dues à la diffusion élastique du rayonnement lumineux d'excitation, lesdites contributions dues à la diffusion élastique pouvant notamment être calculées, notamment au moyen d'un modèle linéaire généralisé de sorte à séparer les contributions dues à la fluorescence et les contributions dues à la diffusion élastique, et l'utilisation desdites contributions pour la caractérisation de l'échantillon. En d'autres termes, un modèle linéaire généralisé peut être utilisé pour séparer les contributions dues à la fluorescence et à la diffusion élastique, ces deux contributions pouvant être ensuite utilisées pour la caractérisation de l'échantillon.
- Le procédé peut comprendre également une phase préliminaire d'étalonnage comportant :

    i) l'éclairage d'une pluralité d'échantillons d'étalonnage par lesdits N≥1 rayonnements lumineux auxdites longueurs d'onde d'éclairage respectives ;
    ii) l'acquisition, pour chaque dit échantillon d'étalonnage, dudit ou desdits spectres de fluorescence ;
    iii) la détermination, par une méthode itérative, desdits vecteurs de *loadings* du modèle statistique, ainsi que d'un vecteur de *scores* de l'indicateur vectoriel pour chaque échantillon d'étalonnage.

- Ladite étape d) de détermination d'au moins un paramètre caractérisant chaque échantillon, ou un procédé auquel ledit échantillon a été soumis, peut être mise en oeuvre par une méthode choisie parmi : une régression multilinéaire à partir dudit indicateur vectoriel ; le calcul d'une distance entre ledit indicateur vectoriel et un vecteur de référence ; un procédé de classification supervisée ou non-supervisée ; et une méthode de « scoring ».
- Le procédé peut comprendre également une phase préliminaire d'étalonnage comportant la détermination d'une fonction liant ledit indicateur vectoriel aux valeurs, connues, dudit ou de chaque paramètre scalaire pour lesdits échantillons d'étalonnage.
- Ledit ou chaque échantillon peut être un produit choisi parmi un aliment, un médicament, un milieu biologique ou un milieu environnemental.
- le paramètre scalaire ou vectoriel est représentatif d'une structure physico-chimique d'une matrice dudit échantillon, ou d'une transformation de ladite structure physico-chimique.

Un autre objet de l'invention est un appareil de caractérisation d'au moins un échantillon comportant :

- au moins une source lumineuse pour éclairer ledit ou chaque échantillon à analyser par N≥1 rayonnements lumineux à des longueurs d'onde d'éclairage respectives ;

- un moyen d'acquisition d'au moins une intensité lumineuse de fluorescence et d'au moins une intensité lumineuse de diffusion élastique émises par ledit ou par chaque échantillon pour chaque dit rayonnement lumineux ; et
- un moyen de traitement des données représentant les intensités lumineuses acquises, programmé ou configuré pour mettre en oeuvre un procédé tel que décrit ci-dessus. Le moyen de traitement des données peut être typiquement un ordinateur ou un processeur programmé de manière opportune.

D'autres caractéristiques, détails et avantages de l'invention ressortiront à la lecture de la description faite en référence aux dessins annexés donnés à titre d'exemple, dans lesquels:

- La figure 1 représente le schéma de principe d'un dispositif pour la mise en oeuvre d'un procédé selon l'invention ;
- Les figures 2A et 2B montrent comment la prise en compte conjointe de la fluorescence et de la diffusion élastique de la lumière améliore la prédiction du temps de cuisson de la viande de boeuf par rapport à l'utilisation de la fluorescence seule ; et
- Les figures 3A et 3B montrent comment la prise en compte conjointe de la fluorescence et de la diffusion élastique de la lumière améliore la prédiction de l'évolution de la teneur en acrylamide au cours de la torréfaction de la chicorée par rapport à l'utilisation de la fluorescence seule.

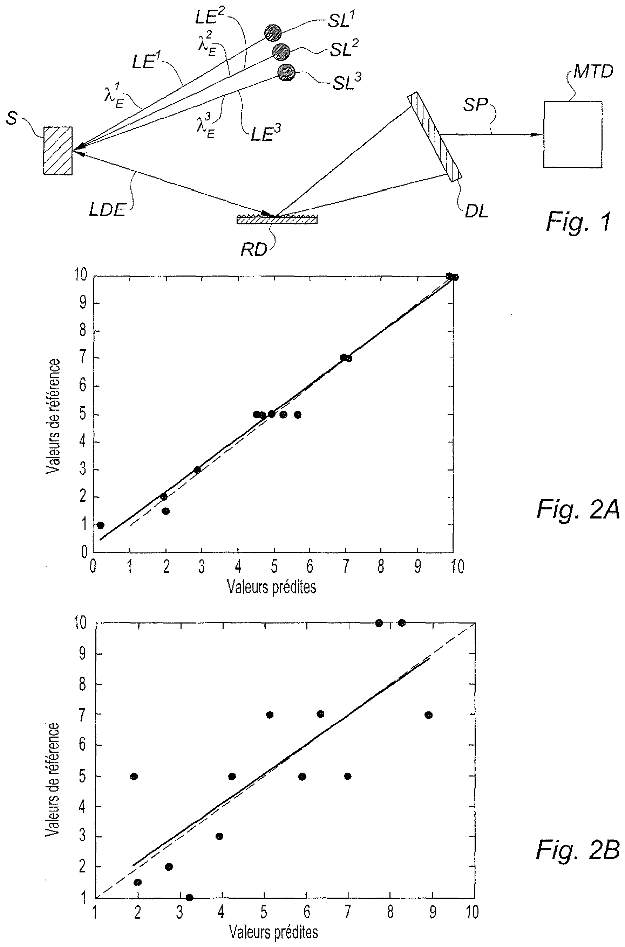

L'appareil de la figure 1 comprend trois sources de lumière monochromatique $SL^1$, $SL^2$ et $SL^3$, générant des rayonnements lumineux d'éclairage respectifs aux longueurs d'onde $\lambda_E^1$, $\lambda_E^2$, $\lambda_E^3$. Des modes de réalisation alternatifs d'un tel appareil pourraient comprendre un nombre supérieur ou inférieur de sources de lumières monochromatique (à la limite, une seule), voire une source lumineuse polychromatique générant l'ensemble des rayonnements d'éclairage.

Les rayonnements $LE^1$-$LE^3$ sont dirigés - simultanément ou à tour de rôle - vers l'échantillon S, qui peut être un solide, une poudre, un liquide contenu dans un récipient transparent, etc. Suite à son éclairement par chaque rayonnement incident LE', l'échantillon S émet un rayonnement LDF qui comprend essentiellement deux contributions : l'une, à la même longueur d'onde que le rayonnement d'éclairage, due à la diffusion élastique ; l'autre, polychromatique, due à la fluorescence. Un réseau de diffraction RD décompose le rayonnement LDF en ses composantes spectrales. Le spectre lumineux résultant, SP, est acquis par un capteur matriciel DL, générant des signaux qui, après conversion en format numérique, sont traités par le moyen de traitement des données MTD.

Dans le mode de réalisation de la figure 1, la diffusion et la fluorescence sont détectées en mode frontal, c'est-à-dire du même côté de l'échantillon S qui reçoit la lumière incidente. Cela n'est pas essentiel.

De même, un élément dispersif autre qu'un réseau de diffraction - par exemple un prisme - peut être utilisé pour décomposer le rayonnement LDF en ses composantes spectrales ; il est même possible de remplacer l'élément dispersif par un spectromètre à transformée de Fourier. Selon une autre variante, on peut utiliser un détecteur de lumière ponctuel, mobile ou associé à un réseau ou prisme tournant (appareil de type monochromateur).

L'utilisation d'un réseau de diffraction présente un avantage, celui de donner accès à plusieurs ordres de diffraction. L'intérêt est de pouvoir accéder à l'amplitude de diffusion, même si le détecteur utilisé est saturé par une trop forte intensité lumineuse (de diffusion typiquement). La réplique due au second ordre de diffraction est en effet beaucoup plus faible que celle de premier ordre, et permet donc d'accéder à l'amplitude du pic de premier ordre (le rapport entre l'intensité diffractée dans chaque ordre étant constant, et ne dépendant que du réseau). On peut ainsi obtenir en même temps un signal de fluorescence élevé, et l'amplitude de diffusion.

Particulièrement lorsque les sources d'éclairage « monochromatiques » présentent des spectres relativement larges (par exemple, s'il s'agit de diodes électroluminescentes), le spectre acquis par le capteur DL comporte des contributions dues à la diffusion élastique et à la fluorescence qui se chevauchent partiellement. Dans ce cas, un prétraitement peut être prévu afin de supprimer cette contribution ; le document précité WO 2011/080408 décrit un procédé de prétraitement de ce type, basé sur la prédiction de la région de diffusion qui chevauche la fluorescence via un modèle linéaire généralisé (GLZ) avec une fonction de liaison log. Ce même document décrit aussi d'autres opérations de prétraitement (normalisation, correction multiplicative de la dispersion...) qui peuvent également être appliquées à la présente invention.

Comme dans le procédé du document précité WO 2011/080408, l'application d'un modèle statistique aux valeurs d'intensité lumineuse de fluorescence acquises par les capteurs $DL^i$ fournit un vecteur, dit « de *scores* », qui caractérise l'échantillon. Conformément à l'invention, un indicateur vectoriel, ou vecteur explicatif, est construit par concaténation dudit vecteur de scores et d'une ou plusieurs valeurs d'intensité de diffusion élastique. A son tour, cet indicateur vectoriel permet d'obtenir un paramètre - scalaire ou vectoriel - caractérisant l'échantillon S ou un procédé auquel ce dernier a été soumis. De préférence, ledit ou chaque paramètre scalaire ou vectoriel sera représentatif d'une structure physico-chimique d'une « matrice » - solide, liquide ou en poudre - dudit échantillon ou d'une transformation d'une telle structure. Il peut s'agir, par exemple, de la teneur en un composé, ou en plusieurs composés d'une même famille, ou bien d'un paramètre quantifiant les modifications physico-chimiques de ladite matrice induites par un procédé tel qu'une cuisson. On entend par « matrice » le constituant principal de l'échantillon, formant une masse relativement homogène, présentant une continuité substantielle et pouvant contenir d'autres constituants minoritaires tels que des particules dispersées ou des gouttelettes en suspension.

Dans certains cas, le vecteur de « scores » de fluorescence peut être remplacé, ou complété, par un vecteur constitué par un certain nombre (généralement compris entre 1 et 6) de valeurs d'intensité de fluorescence à des longueurs d'onde discrètes.

Dans certains cas, l'indicateur vectoriel peut contenir également des informations sur la forme d'un ou plusieurs spectres de diffusion élastique. En effet, ces spectres ne sont pas nécessairement identiques aux spectres d'éclairage correspondants. Ainsi, par exemple, un indicateur vectoriel peut être obtenu en concaténant un vecteur de scores de fluorescence, une ou plusieurs valeurs discrètes d'intensité de diffusion élastique et un ou plusieurs paramètres scalaires représentatifs de la forme ou de la largeur d'un ou plusieurs spectres de diffusion élastique.

La mise en oeuvre du procédé nécessite tout d'abord une phase d'étalonnage, impliquant une pluralité d'échantillons d'étalonnage S'. Les spectres de fluorescence ainsi acquis - le cas échéant après « nettoyage » des contributions parasites dues à la diffusion élastique - sont organisées en un tenseur de données d'ordre trois (« cube de données »), dont les trois « voies » sont : les échantillons, les rayonnements d'éclairage, longueurs d'onde des spectres de fluorescence. Si l'éclairage est monochromatique, les données sont représentées par un tenseur d'ordre deux.

Le modèle statistique appliqué aux données peut être du type « PARAFAC », qui consiste à décomposer un tenseur à trois voies X en une somme de produits externes de trois vecteurs (« triades ») $a_i$, $b_i$, $c_i$, plus un résidu E, lui aussi sous la forme d'un « cube de données ». On peut donc écrire :

$$x_{ijk} = \sum_{f=1}^{F} a_{if} \, b_{jf} \, c_{kf} + e_{ijk} \; ,$$

Où : « i », qui court de 1 à I>1, est l'index des échantillons ; « j » qui court de 1 à J>1, est l'index des longueurs d'onde d'éclairage ; « k », qui court de 1 à K>1 est l'index des longueurs d'onde des spectres de fluorescence correspondant à chaque rayonnement d'éclairage ; « f » est l'index des F facteurs de décomposition PARAFAC. Le nombre F de facteurs peut être défini a priori, ou à l'aide de critères connus de l'art antérieur.

Le vecteur (à F composantes) $a_i.=(a_{i1}...a_{iF})$ est appelé le vecteur des « *scores* » pour l'échantillon S', tandis que les vecteurs $b_j.=(b_{j1}...b_{jF})$ et $c_k.=(c_{k1}...c_{kF})$ sont les vecteurs des « *loadings* » d'éclairage et d'émission, respectivement, qui définissent le modèle statistique. Ces vecteurs sont déterminés, par des méthodes itératives connues (par exemple, moindres carrés alternés), de manière à minimiser la norme de Frobenius tensorielle du résidu E, soit la valeur de $\|X - X_{mat}\|_{FRO}$, où $X_{mat}$ correspond au cube de données du modèle PARAFAC (voir ci-dessous) et $\|.\|_{FRO}$ dénote la norme de Frobenius (ou toute autre norme adaptée).

Le modèle PARAFAC peut être réécrit sous forme matricielle de la manière suivante :

$$X_{mat} = A(C \boxtimes B)^T$$

où :

- $X_{mat}$ est la matrice - de taille I x (J*K) - des intensités des différents rayonnements émis par fluorescence par les échantillons ; cette matrice contient la même information que le tenseur à trois voies **X**, mais organisée différemment ;
- **B** et **C** sont les matrices (de taille J*F et K*F éléments, respectivement) des « *loadings*» d'éclairage et d'émission, dont les colonnes sont formée par les vecteurs $b_j^T.$ et $c_k.^T$ ;
- $A_{IF}$ est la matrice (de taille I*F) des « *scores* », dont les colonnes sont formée par les vecteurs $a_i.^T$ ;
- le symbole $|\otimes|$ représente le produit tensoriel de Khatri-Rao ; et
- l'exposant T indique l'opération de transposition.

Ce modèle permet d'obtenir un vecteur de *scores* pour un nouvel échantillon, après que l'étalonnage ait été effectué. Soit en effet $X_{nouveau}$ le vecteur à J*K composantes contenant les spectres de fluorescence acquis pour ledit nouvel échantillon ; le vecteur (de dimensions F) des *scores* pour ce nouvel échantillon est donné par

$$A_{nouveau} = (B \boxtimes C)^+ \, X_{nouveau} \; ;$$

où l'exposant + indique l'inverse généralisé du produit tensoriel.

Il importe toutefois de noter que le modèle « PARAFAC » est empirique ; il n'est donc valide que pour des échantillons similaires à ceux qui ont servi à l'étalonnage.

Puis, un indicateur vectoriel est construit à partir des vecteurs de *scores* et, par exemple, d'une ou plusieurs valeurs d'intensité de diffusion élastique, voire également d'une ou plusieurs valeurs d'intensité de fluorescence à des longueurs d'onde discrètes. Cela pourra être effectué simplement par concaténation.

Ensuite, un modèle de régression multilinéaire peut être construit à partir des données d'étalonnage pour permettre la prédiction, en fonction dudit indicateur vectoriel, d'un paramètre (voire plusieurs) caractérisant les échantillons et/ou un procédé auxquels ils ont été soumis. Ce paramètre peut être par exemple la teneur en un composant déterminé, ou un temps de cuisson. Bien entendu, la valeur du paramètre caractérisant doit être connue pour les échantillons d'étalonnage.

Plusieurs variantes du procédé de caractérisation décrit ci-dessus peuvent être envisagées sans sortir du cadre de la présente invention. Par exemple, le modèle statistique peut ne pas être de type PARAFAC mais, par exemple, N-PLS, ou d'un autre type connu (voir à ce propos l'ouvrage précité de R. Bro). En outre, le passage des indicateurs vectoriels (qui peuvent être constitués, on le rappelle, par les vecteurs de scores de fluorescence concaténés à des paramètres représentatifs de la diffusion élastique) aux paramètres caractérisant les échantillons peut se faire autrement que par régression multilinéaire, par exemple par calcul d'une distance - euclidienne ou de Mahalanobis - entre l'indicateur vectoriel de chaque échantillon considéré et celui d'un échantillon de référence. Il est également possible d'avoir recours à des techniques de classification supervisée ou non supervisée, ou à une méthode supervisée connue sous le nom de « scoring ».

Le « scoring » est une technique de hiérarchisation des données qui permet d'évaluer par une note (« score ») la probabilité qu'un échantillon ou un groupe d'échantillons ressemble à un autre échantillon ou un autre groupe d'échantillons. Cette probabilité est calculée à partir des indicateurs vectoriels définis ci-dessus.

A titre d'exemple non limitatif, on peut procéder de la manière suivante :

A partir des scores PARAFAC de fluorescence et des intensités de diffusion, on construit une matrice **M**(nxm) où n est le nombre des échantillons, et m le nombre de variable, c'est-à-dire de composantes de chaque indicateur vectoriel.

Un vecteur indicateur de distance y est ensuite calculé en utilisant un modèle linéaire de régression

$$y = b_1a_1 + b_2a_2 + \ldots + b_ma_m + e$$

Le vecteur **y** est binaire est prend les valeurs : zéro pour les échantillons dits de référence, et un pour les échantillons à caractériser. Les vecteurs $a_i$ sont les colonnes de la matrice **M**, les scalaires $b_i$ sont les coefficients du modèle linéaire; e est le vecteur des résidus.

Un test t de Student est appliqué aux distances $\widehat{y_r}$ prédites à partir des scores et diffusions de l'échantillon de référence et des distances $\widehat{y_s}$ prédites à partir des de scores et diffusions de l'échantillon à caractériser. La statistique t est calculée par l'équation suivante :

$$t = \frac{\left(\overline{\widehat{y_r}} - \overline{\widehat{y_s}}\right)}{\sqrt{\dfrac{S_{\widehat{y_r}}}{n_r} + \dfrac{S_{\widehat{y_s}}}{n_s}}}$$

Où $\overline{\widehat{y_r}}$ , $\overline{\widehat{y_s}}$ ; $S_{\widehat{y_r}}$ ; $S_{\widehat{y_{rs}}}$ ; $n_r$ et $n_s$ sont respectivement les moyennes des distances prévues par le modèle linéaire de régression, leurs variances (S) et le nombre de répliques (n) utilisées lors du calibrage pour la référence (indice r), et pour l'échantillon (indice s).

La note de « scoring » est exprimée en fonction de la densité de probabilité :

$$p(t) = \frac{\Gamma\left(\frac{v+1}{2}\right)}{\sqrt{v\pi}\,\Gamma\left(\frac{v}{2}\right)}\left(1 - \frac{t^2}{v}\right)^{-0.5(v+1)} \; ;$$

pour $v \geq 1$

Où $\Gamma$ est la fonction gamma d'Euler et $v$ le degré de liberté

$$v = \frac{\left(\frac{S_{\widehat{y_r}}}{n_r} + \frac{S_{\widehat{y_s}}}{n_s}\right)^2}{\frac{\left(\frac{S_{\widehat{y_r}}}{n_r}\right)^2}{(n_r - 1)} + \frac{\left(\frac{S_{\widehat{y_s}}}{n_s}\right)^2}{(n_s - 1)}}$$

Les échantillons présentant une probabilité externe plus élevée, sur la base de l'hypothèse nulle sur les distributions ( $H_0 : \overline{\widehat{y_r}} = \overline{\widehat{y_s}}$ ) reçoivent les notes les plus élevées, c'est-à-dire les plus proches de 1.

Le résultat technique de l'invention sera illustré ci-dessus à l'aide de deux exemples d'application.

Le premier exemple concerne le contrôle de la cuisson d'un aliment, et en particulier de la viande de boeuf.

La mesure de la diffusion par analyse de la réflectance de la surface d'un morceau de viande en cours de cuisson permet de tracer une courbe cinétique du niveau de cuisson. Les variations de l'intensité lumineuse diffusée au cours du temps reflètent notamment la formation d'agrégats protéiques issus de la dénaturation des protéines à la chaleur, phénomène qui se répercute sur le plan visuel par le changement de couleur du milieu. Dans le cas d'autres aliments, poisson ou blanc d'oeuf, on note plutôt une perte de transparence du milieu. Dans le cas du chauffage ou du caillage du lait, aucune modification n'est perceptible à l'œil nu, mais une mesure quantitative montre que même dans ce cas la diffusion évolue en rapport avec la formation d'agrégats de protéines sériques dénaturées. La fluorescence est également affectée par les transformations chimiques et physico-chimiques qui se produisent au cours de la cuisson. Il est donc possible de définir un niveau de cuisson optimal et sa traduction en termes de cinétique d'évolution de la diffusion ou - mieux - de la combinaison diffusion-fluorescence, mesurées sous forme de distance (Euclidienne ou de Mahalanobis) par rapport au niveau initial. Une autre approche consiste à construire une régression sur le temps de cuisson et identifier le temps optimal prédit par la combinaison des signaux de fluorescence et de diffusion.

Le tableau I indique les coefficients de corrélation obtenus entre les différents *scores* PARAFAC calculés pour des échantillons de viande de boeuf cuits au grill à 180°C pendant 10 min, pour les quatre facteurs identifiés (Fact1 à Fact4), ainsi que les intensités maximales de diffusion et de fluorescence à différentes longueurs d'onde (on parle d'intensité maximale, car les spectres de diffusion et de fluorescence présentent une largeur finie). Plus précisément :

- D1S1 correspond à l'intensité maximale de diffusion élastique d'un rayonnement d'éclairage à 280 nm, mesurée en correspondance du premier ordre de diffraction du réseau RD ;
- D1S2 correspond à l'intensité maximale de diffusion élastique d'un rayonnement d'éclairage à 375 nm, mesurée en correspondance du premier ordre de diffraction du réseau RD ;
- D2S2 correspond à l'intensité de diffusion à 375 nm, mesurée en correspondance du second ordre de diffraction du réseau RD ; et
- D1S3 correspond à l'intensité maximale de diffusion élastique d'un rayonnement d'éclairage à 430 nm, mesurée en correspondance du premier ordre de diffraction du réseau RD.

Le tableau de corrélation montre d'une part que la fluorescence est corrélée significativement à la diffusion et que fluorescence comme diffusion sont corrélés au temps de cuisson.

Tableau I

|  | Fact1 | Fact2 | Fact3 | Fact4 | D1S1 | D1S2 | D2S2 | D1S3 | temps |
|---|---|---|---|---|---|---|---|---|---|
| Fact1 | 1 | -0,95 | 0,52 | -0,96 | 0,55 | 0,48 | 0,50 | -0,06 | -0,58 |
| Fact2 |  | 1 | -0,48 | 0,88 | -0,48 | -0,43 | -0,45 | 0,05 | 0,60 |

(suite)

| | Fact1 | Fact2 | Fact3 | Fact4 | D1S1 | D1S2 | D2S2 | D1S3 | temps |
|---|---|---|---|---|---|---|---|---|---|
| Fact3 | | | 1 | -0,72 | -0,06 | -0,03 | -0,04 | -0,36 | -0,19 |
| Fact4 | | | | 1 | -0,43 | -0,40 | -0,41 | 0,17 | 0,55 |
| D1S1 | | | | | 1 | 0,77 | 0,77 | 0,61 | -0,55 |
| D1S2 | | | | | | 1 | 1 | 0,71 | -0,44 |
| D2S2 | | | | | | | 1 | 0,69 | -0,44 |
| D1S3 | | | | | | | | | -0,30 |
| temps | | | | | | | | | 1 |

La figure 2A illustre le modèle de régression multilinéaire du temps de cuisson (axe des abscisses : temps de cuisson prédit, en minutes ; axe des ordonnées : temps de cuisson réel) obtenu uniquement à partir des données de fluorescence (vecteurs des scores des quatre facteurs PARAFAC) ; la figure 2B illustre le modèle de régression obtenu en utilisant également l'intensité maximale de diffusion élastique à 280 nm (D1S1). Dans les deux cas, l'étalonnage a été effectué sur une base de 14 échantillons. On peut observer que la prise en compte de la diffusion élastique améliore de manière très considérable la prédiction du temps de cuisson ; en effet, l'erreur quadratique moyenne de prédiction passe de 1,60 minute à 0,35 minute.

Le deuxième exemple concerne l'évolution de la teneur en acrylamide de la chicorée au cours de sa torréfaction.

Le tableau II indique les coefficients de corrélation obtenus entre les différents *scores* PARAFAC pour quatre facteurs (Fact1 à Fact4), ainsi que les intensités maximales de diffusion et de fluorescence à différentes longueurs d'onde. D1S1, D1S2 et D1S3 ont été définis en précédence ; D2S1 correspond à la diffusion élastique à 280 nm observée au second ordre de diffraction du réseau RD.

Tableau II

| | Fact1 | Fact2 | Fact3 | Fact4 | D1S1 | D1S2 | D2S2 | D1S3 | Acrylamide |
|---|---|---|---|---|---|---|---|---|---|
| Fact1 | 1 | 0,46 | -0,91 | -0,68 | -0,60 | -0,76 | -0,90 | -0,97 | 0,15 |
| Fact2 | | 1 | -0,78 | 0,17 | -0,33 | -0,64 | -0,52 | -0,44 | -0,68 |
| Fact3 | | | 1 | 0,38 | 0,57 | 0,83 | 0,88 | 0,88 | 0,22 |
| Fact4 | | | | 1 | 0,50 | 0,37 | 0,59 | 0,70 | -0,72 |
| D1S1 | | | | | 1 | 0,90 | 0,79 | 0,62 | -0,01 |
| D2S1 | | | | | | 1 | 0,92 | 0,77 | 0,25 |
| D1S2 | | | | | | | 1 | 0,93 | 0,03 |
| D1S3 | | | | | | | | | -0,16 |
| Acrylamide | | | | | | | | | 1 |

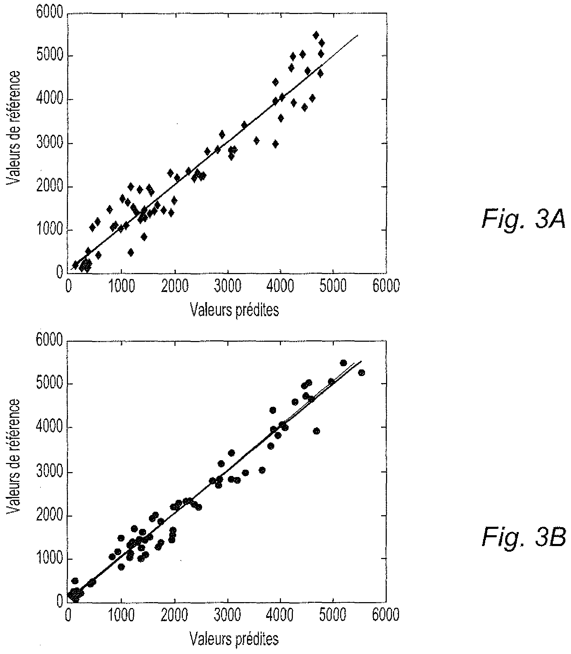

La figure 3A illustre le modèle de régression multilinéaire de la teneur en acrylamide (axe des abscisses : teneur prédite, en pg/kg ; axe des ordonnées : teneur mesurée) obtenu uniquement à partir des données de fluorescence; la figure 3B illustre le modèle de régression obtenu en utilisant également la diffusion élastique. Dans les deux cas, l'étalonnage a été effectué sur une base 68 échantillons. Comme dans le cas du contrôle de la cuisson de la viande on observe une amélioration sensible de la prédiction, avec une erreur quadratique moyenne qui passe de 356 pg/kg à 276 pg/kg.

**Revendications**

1. Procédé de caractérisation d'au moins un échantillon, comportant :

   a) l'éclairage dudit ou de chaque échantillon à analyser par $N \geq 1$ rayonnements lumineux ($LE^1$- $LE^3$) à des

longueurs d'onde d'éclairage respectives ($\lambda_E{}^1$ - $\lambda_E{}^3$) ;

b) l'acquisition, pour chaque dit rayonnement lumineux, d'au moins une intensité lumineuse de fluorescence et d'au moins une intensité lumineuse de diffusion élastique émises par ledit ou par chaque échantillon ;

c) pour ledit ou chaque échantillon, la détermination d'un indicateur vectoriel à partir desdites intensités lumineuses de fluorescence et de diffusion élastique ;

d) la détermination d'au moins un paramètre scalaire ou vectoriel caractérisant chaque échantillon, ou un procédé auquel ledit échantillon a été soumis, à partir de l'indicateur vectoriel correspondant,

le procédé étant **caractérisé en ce que** ladite étape b) comporte, pour ledit ou chaque échantillon, l'acquisition d'au moins un spectre de fluorescence et **en ce que** ladite étape c) comporte, également pour ledit ou chaque échantillon :

- le calcul d'un vecteur de *scores* par application d'un modèle statistique multivarié ou multivoies au dit ou à chaque spectre de fluorescence, ledit modèle statistique étant défini par un vecteur de loadings d'éclairage et par un vecteur de loadings de fluorescence ; et
- la concaténation dudit vecteur de *scores* avec au moins une valeur d'intensité de diffusion élastique ou un paramètre caractéristique d'au moins un spectre de diffusion élastique, de sorte à obtenir ledit indicateur vectoriel.

2. Procédé selon l'une des revendications précédentes, dans lequel lesdites intensités lumineuses de fluorescence et de diffusion élastique sont acquises en mode frontal.

3. Procédé selon l'une des revendications précédentes, dans lequel ladite étape a) comporte l'éclairage dudit ou de chaque échantillon à analyser par un nombre compris entre 1 et 6 de rayonnements lumineux sensiblement monochromatiques.

4. Procédé selon l'une quelconque des revendications précédentes, dans lequel ledit modèle statistique mis en oeuvre à l'étape c) est choisi parmi un modèle PARAFAC et un modèle NPLS.

5. Procédé selon l'une quelconque des revendications précédentes, dans lequel ladite étape b) comporte, pour ledit ou chaque échantillon :

- l'acquisition d'au moins un spectre comprenant des contributions dues à la fluorescence et à la diffusion élastique,
- la soustraction desdites contributions dues à la diffusion élastique du rayonnement lumineux d'excitation, lesdites contributions dues à la diffusion élastique étant calculées au moyen d'un modèle linéaire généralisé de sorte à séparer les contributions dues à la fluorescence et les contributions dues à la diffusion élastique, et
- l'utilisation desdites contributions pour la caractérisation de l'échantillon.

6. Procédé selon l'une quelconque des revendications précédentes, comprenant également une phase préliminaire d'étalonnage comportant :

i) l'éclairage d'une pluralité d'échantillons d'étalonnage par lesdits N≥1 rayonnements lumineux auxdites longueurs d'onde d'éclairage respectives ;
ii) l'acquisition, pour chaque dit échantillon d'étalonnage, dudit ou desdits spectres de fluorescence ;
iii) la détermination, par une méthode itérative, desdits vecteurs de loadings du modèle statistique, ainsi que d'un vecteur de *scores* de l'indicateur vectoriel pour chaque échantillon d'étalonnage.

7. Procédé selon l'une des revendications précédentes, dans lequel ladite étape d) de détermination d'au moins un paramètre caractérisant chaque échantillon, ou un procédé auquel ledit échantillon a été soumis, est mise en oeuvre par une méthode choisie parmi :

- une régression multilinéaire à partir dudit indicateur vectoriel ;
- le calcul d'une distance entre ledit indicateur vectoriel et un vecteur de référence ;
- un procédé de classification supervisée ou non-supervisée ; et
- une méthode de « scoring ».

8. Procédé selon la revendication 7, comprenant également une phase préliminaire d'étalonnage comportant la détermination d'une fonction liant ledit indicateur vectoriel aux valeurs, connues, dudit ou de chaque paramètre scalaire ou vectoriel pour lesdits échantillons d'étalonnage.

9. Procédé selon l'une des revendications précédentes, dans lequel ledit ou chaque échantillon est un produit choisi parmi un aliment, un médicament, un milieu biologique ou un milieu environnemental.

10. Procédé selon l'une des revendications précédentes, dans lequel le paramètre scalaire ou vectoriel est représentatif d'une structure physico-chimique d'une matrice dudit échantillon, ou d'une transformation de ladite structure physico-chimique.

11. Appareil de caractérisation d'au moins un échantillon comportant :

- au moins une source lumineuse (SL1- SL3) pour éclairer ledit ou chaque échantillon à analyser par N≥1 rayonnements lumineux (LE) à des longueurs d'onde d'éclairage respectives ($\lambda_E{}^1$ - $\lambda_E{}^3$) ;
- un moyen d'acquisition (DL) d'au moins une intensité lumineuse de fluorescence et d'au moins une intensité lumineuse de diffusion élastique émises par ledit ou par chaque échantillon pour chaque dit rayonnement lumineux ; et
- un moyen de traitement des données (MTD) représentant les intensités lumineuses acquises, programmé ou configuré pour mettre en oeuvre un procédé selon l'une des revendications 1 à 10.

**Patentansprüche**

1. Verfahren zur Charakterisierung mindestens einer Probe, umfassend:

a) die Beleuchtung der oder jeder zu analysierenden Probe mit N > 1 Lichtstrahlen (LE$^1$ - LE$^3$) mit jeweiligen Beleuchtungswellenlängen ($\lambda_E{}^1$ - $\lambda_E{}^3$);
b) die Erfassung, für jeden Lichtstrahl, von mindestens einer Fluoreszenzlichtintensität und mindestens einer Lichtintensität elastischer Streuung, die von der oder von jeder Probe emittiert werden;
c) für die oder jede Probe, die Bestimmung eines vektoriellen Indikators ausgehend von den Fluoreszenzlichtintensitäten und Lichtintensitäten elastischer Streuung;
d) die Bestimmung von mindestens einem skalaren oder vektoriellen Parameter, der jede Probe kennzeichnet, oder ein Verfahren, dem die Probe, ausgehend von dem entsprechenden vektoriellen Parameter, unterzogen wurde,
wobei das Verfahren **dadurch gekennzeichnet ist, dass** der Schritt b) für die oder jede Probe die Erfassung von mindestens einem Fluoreszenzspektrum umfasst, und dadurch, dass der Schritt c), ebenfalls für die oder jede Probe, umfasst:

- die Berechnung eines Punktzahlvektors durch Anwendung eines multivariaten oder multikanaligen statistischen Modells auf das oder auf jedes Fluoreszenzspektrum, wobei das statistische Modell definiert wird durch einen Beleuchtungsloadingsvektor und durch einen Fluoreszenzloadingsvektor; und
- die Verkettung des Punktzahlvektors mit mindestens einem Intensitätswert der elastischen Streuung oder einem Parameter, der charakteristisch ist für mindestens ein Spektrum elastischer Streuung, derart, um den vektoriellen Indikator zu erhalten.

2. Verfahren nach einem der vorstehenden Ansprüche, wobei die Fluoreszenzlichtintensitäten und Lichtintensitäten elastischer Streuung im Frontalmodus erfasst werden.

3. Verfahren nach einem der vorstehenden Ansprüche, wobei der Schritt a) die Beleuchtung der oder jeder zu analysierenden Probe mit einer Anzahl zwischen 1 und 6 von im Wesentlichen monochromatischen Lichtstrahlen umfasst.

4. Verfahren nach einem der vorstehenden Ansprüche, wobei das in dem Schritt c) eingesetzte statistische Modell ausgewählt ist aus einem PARAFAC-Modell und einem NPLS-Modell.

5. Verfahren nach einem der vorstehenden Ansprüche, wobei der Schritt b) für die oder jede Probe umfasst:

- die Erfassung von mindestens einem Spektrum, beinhaltend Beiträge aufgrund der Fluoreszenz und der elastischen Streuung,
- die Subtraktion der Beiträge aufgrund der elastischen Streuung des Anregungslichtstrahls, wobei die Beiträge aufgrund der elastischen Streuung mittels eines generalisierten linearen Modells derart berechnet werden, um die Beiträge aufgrund der Fluoreszenz und die Beiträge aufgrund der elastischen Streuung zu trennen, und
- die Verwendung der Beiträge für die Charakterisierung der Probe.

6. Verfahren nach einem der vorstehenden Ansprüche, ebenfalls beinhaltend eine Phase vorläufiger Kalibrierung, umfassend:

i) die Beleuchtung einer Vielzahl von Kalibrierungsproben mit den N ≥ 1 Lichtstrahlen der jeweiligen Beleuchtungswellenlängen;
ii) die Erfassung, für jede Kalibrierungsprobe, des Fluoreszenzspektrums oder der Fluoreszenzspektren;
iii) die Bestimmung, durch ein iteratives Verfahren, der Loadingsvektoren des statistischen Modells sowie eines *Punktzahl*vektors des vektoriellen Indikators für jede Kalibrierungsprobe.

7. Verfahren nach einem der vorstehenden Ansprüche, wobei der Schritt d) der Bestimmung von mindestens einem Parameter, der jede Probe charakterisiert, oder ein Verfahren, dem die Probe unterzogen wurde, durch eine Methode eingesetzt wird, ausgewählt aus:

- einer multilinearen Regression ausgehend von dem vektoriellen Indikator;
- der Berechnung eines Abstands zwischen dem vektoriellen Indikator und einem Referenzvektor;
- einem überwachten oder nicht überwachten Verfahren zur Klassifizierung; und
- einer "Punktzahlvergabe"-Methode.

8. Verfahren nach Anspruch 7, beinhaltend ebenfalls eine Phase vorläufiger Kalibrierung, umfassend die Bestimmung einer Funktion, die den vektoriellen Indikator mit bekannten Werten des oder jeden skalaren oder vektoriellen Parameters für die Kalibrierungsproben verbindet.

9. Verfahren nach einem der vorstehenden Ansprüche, wobei die oder jede Probe ein Produkt ist, ausgewählt aus einem Nahrungsmittel, einem Medikament, einer biologischen Umgebung oder einem Umweltbereich.

10. Verfahren nach einem der vorstehenden Ansprüche, wobei der skalare oder vektorielle Parameter repräsentativ ist für eine physikalisch-chemische Struktur einer Matrix der Probe oder für eine Transformation der physikochemischen Struktur.

11. Einrichtung zur Charakterisierung mindestens einer Probe, umfassend:

- mindestens eine Lichtquelle (SL1-SL3) zum Beleuchten der oder jeder zu analysierenden Probe mit N > 1 Lichtstrahlen (LE) mit jeweiligen Wellenlängen ($\lambda_E{}^1$ - $\lambda_E{}^3$);
- ein Mittel zur Erfassung (DL) von mindestens einer Fluoreszenzlichtintensität und von mindestens einer Lichtintensität elastischer Streuung, die von der oder jeder Probe emittiert werden, für jeden Lichtstrahl; und
- ein Mittel zur Bearbeitung von Daten (MTD), die die erfassten Lichtintensitäten repräsentieren, programmiert oder konfiguriert, um ein Verfahren nach einem der Ansprüche 1 bis 10 einzusetzen.

**Claims**

1. A method for characterising at least one sample, comprising:

a) illuminating said or each sample to be analysed with N≥1 light rays (LE$^1$- LE$^3$) at respective wavelengths of light ($\lambda E^1$ - $\lambda E^3$);
b) acquiring, for each said light ray, of at least one fluorescent light intensity and at least one elastic scattering light intensity emitted by said or each sample;
c) for said or each sample, determining a vector indicator from said fluorescence and elastic scattering light intensities;
d) determining at least one scalar or vector parameter characterising each sample, or a method to which said sample has been subjected, from the corresponding vector indicator,
the method being **characterised in that** said step b) comprises, for said or each sample, the acquisition of at least one fluorescence spectrum and **in that** said step c) comprises, also for said or each sample:

- calculating a vector of *scores* by applying a multivariate or multipath statistical model to said or each fluorescence spectrum, said statistical model being defined by a vector of illumination loadings and by a vector of fluorescence loadings; and
- concatenating said vector of *scores* with at least one elastic scattering intensity value or characteristic parameter of at least one elastic scattering spectrum, thereby obtaining said vector indicator.

2. The method according to one of the preceding claims, wherein said fluorescence and elastic scattering light intensities are acquired in frontal mode.

3. The method according to one of the preceding claims, wherein said step a) comprises illuminating said or each sample to be analysed with a number between 1 and 6 substantially monochromatic light rays.

4. The method according to any one of the preceding claims, wherein said statistical model implemented in step c) is selected from a PARAFAC model and a NPLS model.

5. The method according to any one of the preceding claims, wherein said step b) comprises, for said or each sample:

- acquiring at least one spectrum comprising contributions due to the fluorescence and elastic scattering,
- subtracting said contributions due to the elastic scattering from the excitation light ray, said contributions due to elastic scattering being calculated by means of a generalised linear model so as to separate the contributions due to the fluorescence and the contributions due to the elastic scattering, and
- using said contributions for characterisation of the sample.

6. The method according to any one of the preceding claims, also comprising a preliminary calibration phase comprising:

i) illuminating a plurality of calibration samples with said N≥1 light rays at said respective wavelengths of light;
ii) acquiring, for each said calibration sample, said fluorescence spectrum(s); and
iii) determining, by an iterative method, said loadings vectors of the statistical model, as well as a vector of *scores* of the vector indicator for each calibration sample.

7. The method according to one of the preceding claims, wherein said step d) of determining at least one parameter characterising each sample, or a process to which said sample has been subjected, is implemented by a method selected from:

- a multilinear regression from said vector indicator;
- the calculation of a distance between said vector indicator and a reference vector;
- a supervised or unsupervised classification method; and
- a scoring method.

8. The method according to claim 7, also comprising a preliminary calibration phase comprising determining a function relating said vector indicator to known values of said or each scalar or vector parameter for said calibration samples.

9. The method according to one of the preceding claims, wherein said or each sample is a product selected from a food, a drug, a biological medium or an environmental medium.

10. The method according to one of the preceding claims, wherein the scalar or vector parameter is representative of a physicochemical structure of a matrix of said sample, or of a transformation of said physicochemical structure.

11. An apparatus for characterising at least one sample comprising:

- at least one light source (SL1 - SL3) for illuminating said or each sample to be analysed with N≥1 light rays (LE) at respective wavelengths of light ($\lambda E^1$ - $\lambda E^3$);
- means for acquiring (DL) at least one fluorescent light intensity and at least one elastic scattering light intensity emitted by said or each sample for each said light ray; and
- a data processing means (MTD) representing the acquired light intensities, programmed or configured to implement a method according to one of claims 1 to 10.

Fig. 1

Fig. 2A

Fig. 2B

Fig. 3A

Fig. 3B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011080408 A
- WO 2011158192 A
- WO 2008027323 A2

**Littérature non-brevet citée dans la description**

- Multi-way Analysis in the Food Industry Models, Algorithms, and Applications. **R. BRO.** PhD thesis. Universiteit van Amsterdam, 1998
- **Y. LIO ; Y.-R. CHEN.** Analysis of visible réflectance spectra of stored, cooked and diseased chicken meats. *Meat Science,* 2001, vol. 58, 395-401
- **N. DE BELIE et al.** The Use of Visible and Near-Infrared Reflectance Measurements to assess Sensory Changes in Carrot Texture and Sweetness during Heat Treatment. *Biosystems Engineering,* 2003, vol. 85 (2), 213-225